Europäisches Patentamt

European Patent Office

Office européen des brevets

(19)

(11) **EP 0 498 477 B1**

(12)

# FASCICULE DE BREVET EUROPEEN

(45) Date de publication et mention
de la délivrance du brevet:
**01.05.1996 Bulletin 1996/18**

(51) Int Cl.⁶: **G07F 7/02**, G07F 7/08

(21) Numéro de dépôt: **92200088.0**

(22) Date de dépôt: **14.01.1992**

(54) **Système de gestion de moyens de paiement de prestations par support d'information amovible**

Verwaltungssystem von Mitteln zur Dienstleistungszahlung mit Hilfe eines tragbaren
Informationsträgers

System for managing means for paying services using a portable information carrier

(84) Etats contractants désignés:
**AT BE CH DE ES GB IT LI NL SE**

(30) Priorité: **05.02.1991 FR 9101284**

(43) Date de publication de la demande:
**12.08.1992 Bulletin 1992/33**

(73) Titulaire: **SCHLUMBERGER INDUSTRIES**
**F-92120 Montrouge (FR)**

(72) Inventeur: **Ferrus, Joele**
**F-25000 Besancon (FR)**

(56) Documents cités:
**EP-A- 0 310 485          EP-A- 0 345 108**
**EP-A- 0 402 182          FR-A- 2 582 123**
**FR-A- 2 608 297          FR-A- 2 642 205**
**US-A- 4 204 113**

**Description**

La présente invention a pour objet un système de gestion de moyens de paiement de prestations par support d'informations amovible.

De façon plus précise, l'invention concerne un système de gestion des informations qui doivent être inscrites dans des supports d'informations amovibles qui sont utilisés pour effectuer le paiement de prestations, telles que par exemple le stationnement payant ou tout autre type de prestations analogues.

Il existe maintenant de nombreux systèmes de fourniture de prestations dans lesquels les utilisateurs acquièrent auprès d'un organisme gestionnaire des supports d'informations amovibles, le plus souvent des cartes à mémoire électronique, qui leur donneront le droit d'obtenir des prestations pour un montant correspondant au paiement initial d'une somme auprès de l'organisme prestataire. Parmi les prestations qu'on peut ainsi obtenir, on peut citer en particulier le paiement du stationnement payant sur la voie publique ou dans des parcs en ouvrage. On peut également citer l'utilisation de cartes à mémoire électronique pour avoir accès à des réseaux câblés de distribution d'émissions de télévision, etc.

Dans la suite de la description, on utilisera l'expression de "carte à mémoire électronique" pour désigner un support d'informations électronique, amovible et portatif étant entendu qu'on ne sortirait pas de l'invention si le support d'informations était constitué par un objet muni de circuits électroniques convenables ayant une autre forme extérieure que celle d'un corps de carte, cet objet pouvant être par exemple une clé, et...

Dans de tels systèmes de fourniture de prestations, on trouve d'une part des cartes à mémoire électronique qui sont détenues par chaque utilisateur voulant obtenir la prestation et d'autre part par des appareils permettant d'obtenir effectivement la prestation souhaitée. Ces appareils, par exemple des horodatrices pour le stationnement payant, comportent en particulier un lecteur de cartes à mémoire électronique qui permet d'établir un dialogue entre le circuit électronique de la carte et la machine de fourniture de la prestation. Ce dialogue comporte essentiellement une phase d'authentification de la carte et éventuellement d'authentification du porteur de la carte et une phase d'inscription dans la mémoire de la carte de débits correspondant aux montants de prestation que le détenteur de la carte souhaite obtenir.

Un des problèmes qui se pose dans ce type de systèmes est le mode d'enregistrement dans la mémoire de la carte des montants successifs de prestations délivrées au détenteur de la carte. En effet, le circuit électronique monté dans la carte comporte une zone mémoire dont on cherche toujours à limiter la capacité afin de réduire le prix du composant électronique utilisé dans la carte. Il va de soi que ce problème est aisément résolu lorsque chaque prestation a toujours le même montant.

En revanche, lorsque le montant de chaque prestation peut être choisi par l'utilisateur, on comprend que le problème de l'enregistrement des différents montants soit plus délicat. Ce problème est rendu encore plus complexe s'il existe une grande différence entre le montant le plus élevé et le montant le moins élevé pouvant être inscrit dans la mémoire de la carte à l'occasion de la fourniture de chaque prestation.

Pour tenter de résoudre ce problème, il a déjà été proposé, par exemple dans la demande de brevet européen n° 0 345 108, des cartes à mémoire électronique dans lesquelles la zone de mémoire est divisée en plusieurs régions, chaque région correspondant à une certaine valeur monétaire. L'affectation des valeurs monétaires à chaque zone de mémoire est prédéterminée et programmée avant la mise en service de la carte. Au besoin, des moyens de calcul du solde disponible permettent de vérifier que la valeur cumulée des débits reste inférieure au pouvoir d'achat préchargé.

Une telle solution permet certes d'améliorer le montant total qui peut être inscrit dans la mémoire de la carte pour un nombre de points mémoire donné mais elle présente encore une rigidité importante puisque chaque zone de mémoire se voit affecter dès le départ une valeur monétaire fixe.

Un objet de la présente invention est de fournir un système de moyens de paiement de prestations par carte à mémoire électronique qui autorise une plus grande souplesse dans l'enregistrement des montants successifs dans la mémoire de la carte et qui permette ainsi un meilleur taux d'utilisation des points mémoire de la carte tout en autorisant la fourniture de prestations de montants très variés.

Pour atteindre ce but, et conformément à l'invention, un système de gestion de moyens de paiement de prestations comprenant:

- au moins un support d'informations amovible comportant une mémoire électronique comprenant, d'une part, une zone protégée en écriture, et, d'autre part, une zone non protégée,
- au moins un dispositif de traitement comprenant :

  • des moyens pour lire les informations stockées dans la mémoire dudit support d'informations amovible et pour y écrire des informations dans ladite zone non protégée,
  • des moyens d'inscription d'une information de débit dans ledit dispositif de traitement, et
  • un ensemble de traitement comportant des moyens de calcul du solde disponible dans le support,

  se caractérise par le fait que :

- la mémoire comporte, dans ladite zone protégée en écriture, une information initiale de pouvoir d'achat et n informations distinctes de poids monétaires utilisables par le système, exprimés en unités de monnaie courantes,

- la mémoire comporte, dans ladite zone non protégée, des zones de débit ouvertes successivement au fur et à mesure des débits à inscrire et affectées chacune, à un poids monétaire particulier choisi parmi les poids monétaires utilisables par le système, prédéfinis dans la zone protégée, chaque zone de débit comprenant une portion d'en-tête dans laquelle est inscrit, sous forme codée, ledit poids monétaire correspondant et une portion de débit constituée par une pluralité de points mémoire, chaque point mémoire correspondant à un débit égal à une unité du poids monétaire inscrit dans la portion d'en-tête,

- ladite affectation et l'ouverture éventuelle de nouvelles zones de débit sont effectuées, en cours d'utilisation dudit support, par la mise en oeuvre d'un algorithme de décision à partir de l'information de débit à inscrire, des poids monétaires utilisables, des poids monétaires des zones de débit déjà ouvertes, des points mémoire non consommés desdites zones de débit déjà ouvertes,

- le solde disponible dans le support est calculé à partir de l'information de pouvoir d'achat et de la somme totale dépensée.

On comprend qu'ainsi, lors de la mise en service de la carte, les zones de débit ne sont pas encore affectées à un poids monétaire particulier et que cette affectation se fera seulement en cours d'utilisation de la carte, au fur et à mesure des montants à inscrire. En outre, le mode d'inscription et l'ouverture éventuelle de nouvelles zones de débit avec affectation d'un poids monétaire se font à partir d'un algorithme de décision qui permet de gérer de façon optimale l'utilisation des points mémoire de la mémoire de la carte.

Il apparaît également clairement qu'il est important de protéger les zones de débit contre des tentatives d'écriture frauduleuse visant à augmenter illicitement le pouvoir d'achat de la carte par rapport à son pouvoir d'achat initial. Pour atteindre cet objectif, selon un mode perfectionné de mise en oeuvre de l'invention, chaque portion d'en-tête de chaque zone de débit comporte q points mémoire et le poids monétaire le plus élevé est inscrit dans cette portion en écrivant chacun des q points mémoire et les poids monétaires suivants sont inscrits par ordre décroissant à l'aide des nombres binaires décroissants suivants comportant q positions binaires.

On voit qu'ainsi toute tentative de fraude consistant à modifier les informations inscrites dans les portions d'en-tête des zones de débit ne peut revenir qu'à augmenter les poids monétaires et donc à augmenter l'information de montant total déjà inscrite dans la carte, ce qui revient à pénaliser le porteur de la carte.

Selon un mode préféré de mise en oeuvre de l'invention, les différents poids monétaires utilisables sont enregistrés directement ou indirectement dans la zone de la mémoire protégée en écriture. De préférence également le reste de la mémoire est divisée en N zones de débit ayant chacune le même nombre de points mémoire, chaque zone de débit comportant une portion d'en-tête et une portion de débit.

Ce mode de mise en oeuvre diminue la flexibilité du système puisque la longueur de chaque portion de débit est la même pour toutes et que cette longueur est fixée à l'avance. En revanche ce mode de réalisation simplifie les opérations à effectuer dans la mémoire de la carte et augmente la sécurité de son emploi.

D'autres caractéristiques et avantages de la présente invention apparaîtront plus clairement à la lecture de la description qui suit de plusieurs modes de réalisation de l'invention donnés à titre d'exemples non limitatifs. La description se réfère aux dessins annexés sur lesquels :

- la figure 1 est un schéma montrant l'organisation de la mémoire de la carte à mémoire électronique ;
- la figure 2 montre l'ensemble du système de gestion des moyens de paiement de prestations ;
- la figure 3 est un organigramme des différents programmes mis en oeuvre par le système de gestion ; et
- les figures 4a et 4b montrent l'inscription de deux débits successifs dans la mémoire de la carte.

Afin de mieux faire comprendre l'invention, on va d'abord en décrire un mode particulier de mise en oeuvre puis on décrire ultérieurement l'invention dans sa généralité.

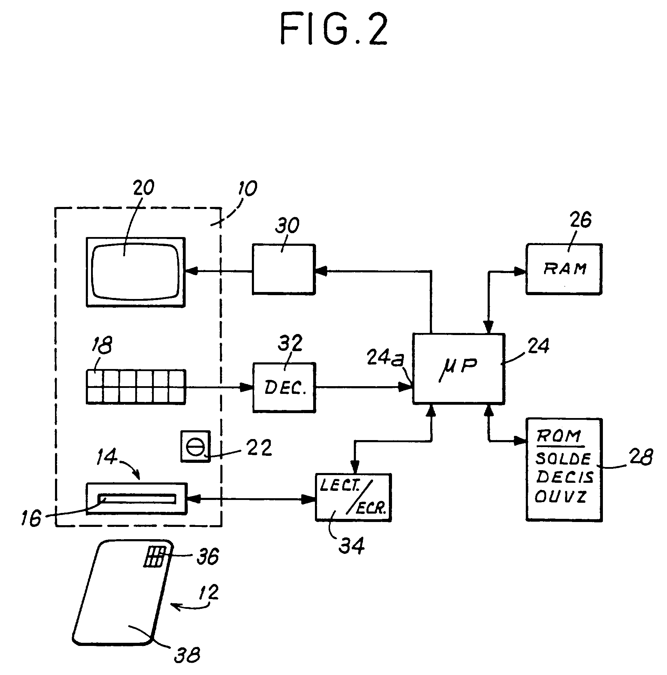

En se référant tout d'abord à la figure 2, on va décrire l'ensemble du système de gestion du paiement des prestations par certes à mémoire.

Sur cette figure, on a représenté un terminal 10 de fourniture de prestation et une carte à mémoire électronique 12. Il va de soi qu'un système complet comprend plusieurs terminaux tels que 10 disposés à différents emplacements et un grand nombre de cartes 12, chaque carte étant détenue par un usager désirent avoir accès à la prestetion. Le terminal 10 est, par exemple, une borne de stationnement payent à mémoire utilisée pour délivrer des tickets de stationnement portant le mention de l'heure limite de stationnement autorisé. Le paiement correspondant est effectué à l'aide de le carte 12. Il va de soi que le terminal 10 pourrait servir à fournir d'autres prestations telles que des services télématiques, l'accès payent à une piscine, un tennis municipal, etc.

Le terminal 10 comprend un lecteur de carte 14 dont on a représenté la fente d'introduction 16 pour introduire les cartes 12 et un clavier alphanumérique 18 servant à introduire le nature de la prestation souhaitée et son montant. Dans l'exemple considéré, il s'agit d'une durée de stationnement payant. Il comprend également un dispositif d'affichage 20 qui permet à l'utilisateur de vérifier que l'information qu'il a introduite à l'aide du clavier 18 correspond bien à la durée de stationnement souhaité, et une goulotte 22 pour la sortie du ticket de stationnement.

L'organisation d'une borne de stationnement est en soi bien connue. On peut voir par exemple le brevet européen No. 86401195. On ne décrire donc en détail que la partie du terminal permettant de gérer le paiement de le durée de stationnement souhaité. Les circuits du terminal 10 comprennent un microprocesseur 24 servant à gérer l'ensemble des fonctions du terminal. Le microprocesseur 24 est associé à une mémoire de travail 26 du type RAM et une mémoire de programme et de données 28, du type ROM par exemple. Le microprocesseur 24 commande le dispositif d'affichage 20 par l'intermédiaire du circuit de commande 30. Il reçoit également sur son entrée 24a les informations introduites par l'utilisateur à l'aide du clavier 18, par l'intermédiaire d'un décodeur 32 monté entre le clavier 18 et l'entrée 24a. Le microprocesseur 24 est également relié au lecteur de cartes 14 par l'intermédiaire d'un circuit de commande de lecture/écriture 34. Les lecteurs de cartes sont en soi bien connus. On sait qu'ils ont pour fonction d'une part d'assurer une liaison électrique entre le circuit électronique de le carte relié eux plages externes de contact électrique 36 de celle-ci et les circuits de traitement du lecteur de cartes, et d'autre part de commander la lecture d'informations contenues dans les circuits de le carte et l'écriture de nouvelles informations dans les circuits de le carte. De nombreux documents décrivent ce double aspect et il n'est pas nécessaire de décrire le lecteur plus en détails.

En ce qui concerne le carte 12, celle-ci se compose essentiellement d'un corps de carte isolent 38 de forme générale rectangulaire dans lequel est noyée une (ou plusieurs) pastille semi-conductrice dans laquelle sont formés les différents circuits électroniques de le carte. Les bornes de cette pastille sont électriquement raccordées eux plages externes 36 de le carte disposées dans une face principale du corps de carte. Les circuits électroniques de le carte peuvent varier très sensiblement selon le type de carte. Ils ont cependant tous en commun de comporter un circuit mémoire du type EPROM ou EEPROM et des circuits de commande d'écriture et de lecture des différents points mémoire. Dans les versions les plus simples, ces circuits sont capables de distinguer une instruction d'écriture, une instruction de lecture et une information d'adresse à laquelle la lecture ou l'écriture doit être effectuée.

Dans des versions plus élaborées, les circuits comprennent un microprocesseur capable d'effectuer lui-même un traitement des informations reçues ou déjà mémorisées et de gérer les accès à le mémoire ou à certaines parties de la mémoire en lecture et en écriture. La présente invention est plus particulièrement intéressant dans le ces du premier type de certes et plus précisément dans le cas où le mémoire est du type EPROM, cependant elle peut s'appliquer également à des certes à microprocesseur.

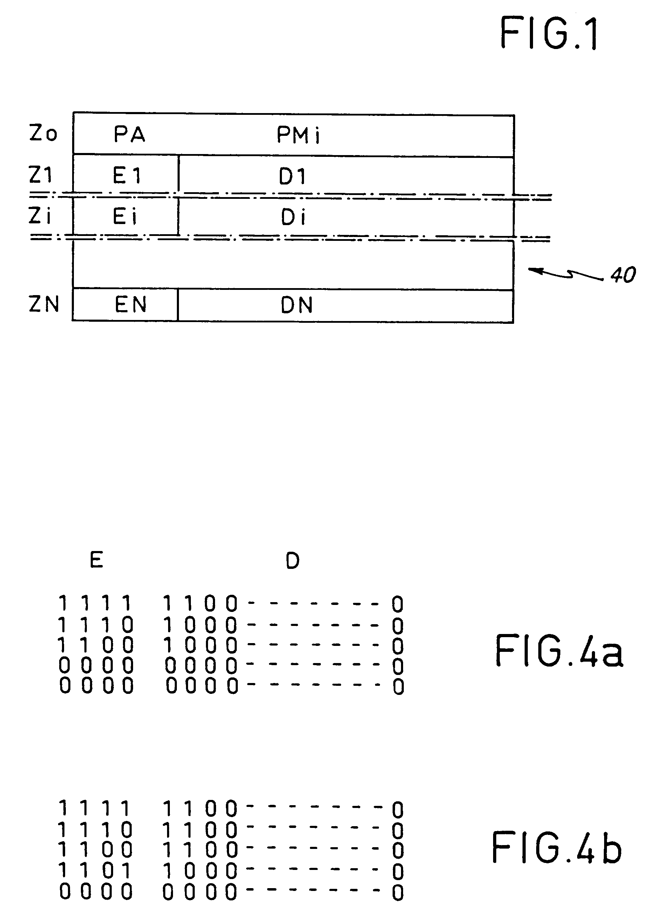

Selon un aspect de l'invention, la mémoire de la carte est organisée et découpée d'une manière particulière qu'on va expliquer maintenant en référence à la figure 1.

Le mémoire 40 du circuit de la carte 12 comprend tout d'abord une zone de données Zo protégée en écriture après l'inscription initiale dans la zone Zo d'informations fixes qui seront explicitées ci-après. Elle comprend également N zones de débit référencées Z1 à ZN destinées à recevoir des informations en cours d'utilisation de la carte.

La zone Zo comporte les informations suivantes qui y sont inscrites avant que la carte ne soit remise à l'utilisateur :

- une information de pouvoir d'achat PA qui correspond au montant total de prestations que l'usager pourra obtenir à l'aide de se carte. Ce pouvoir d'achat correspond bien sûr eu prix que l'usager devra acquitter pour obtenir se carte ; et
- n informations de poids monétaires PMi.

Les poids monétaires servent à inscrire dans le carte le montant de la prestation demandée et obtenue par l'usager à l'aide de sa carte. Dans le cas du stationnement payent en France, ces poids monétaires peuvent être respectivement égaux à 0,50 FF (PM1), 1,00 FF (PM2), 2,00 FF (PM3) et 5,00 FF (PM4) (n = 4). En d'autres termes, un montant M s'exprimera sous le forme :

$$M = xPM1 + yPM2 + zPM3 + tPM4.$$

On expliquera ultérieurement comment sont déterminés les coefficients (nombres entiers) x, y, z et t.

Toutes les zones de débit Z1 à ZN comportent le même nombre de points mémoire qui dépend bien sûr de la capacité totale de la mémoire 40 et du nombre de zones de débit N. Par exemple chaque zone de débit comprend 32 points mémoire.

Chaque zone de débit Z1 à ZN est à son tour divisée en une portion d'en-tête E comportant q points mémoire et une portion de débit D associée. On a ainsi les portions d'en-tête E1 à EN et les portions de débit D1 à DN. Dans l'exemple considéré, chaque portion d'en-tête D comporte quatre points mémoire (q=4) et chaque portion de débit D en comporte vingt-huit.

En cours d'utilisation de la carte, chaque portion d'en-tête E1 à EN est destinée à permettre l'écriture d'un poids monétaire PM1 à PM4 et la portion de débit correspondante D1 à DN le coefficient x, y, z ou t correspondant au poids monétaire. Les poids monétaires PM1 à PM4 sont inscrits sous une forme codée prédéterminée sur les quatre points mémoire disponibles dans la portion d'en-tête. Par convention dans la présente demande de brevet on représentera par un "0" un point mémoire non inscrit, c'est-à-dire dans son état initial et par un "1" un point mémoire écrit ou "grillé". Compte tenu du type de mémoire utilisé, on comprend que le "grillage" d'un point mémoire est irréversible. Par exemple le poids monétaire PM1 s'écrira 1100 ; PM2 1101 ; PM3 1110 et PM4 1111. L'inscription des coefficients x, y, z, t se fait en grillant un nombre de points mémoire égal à le valeur du coefficient considéré.

Si l'on excepte le cas de la première utilisetion de le carte, la mémoire de celle-ci comporte les informations fixes dans la zone de données Zo, une information de poids monétaire PMi dans au moins une des portions d'en-tête E et eu moins un point mémoire grillé dans la portion de débit D correspondant à la portion d'en-tête inscrite.

Dans l'exemple particulier décrit, la mémoire 40 comporte dix zones de débit (N=10). Le nombre N de zones de débit est de préférence supérieur eu nombre n de poids monétaires distincts.

On va maintenant décrire le fonctionnement du système de gestion selon l'invention. Lorsque l'usager entre sa carte 12 dans le lecteur de cartes 14 du terminal 10, le microprocesseur 24 va mettre en oeuvre deux programmes principaux : d'une part un programme SOLDE pour déterminer le solde encore disponible dans la mémoire de la carte. D'autre part le programme DEBIT pour inscrire dans le mémoire de la carte le montant de la prestation demandée par l'utilisateur à l'aide du clavier 18.

Le programme SOLDE se déroule de la manière suivante : après l'introduction de la carte 12 dans la fente 14 du lecteur, le microprocesseur 24, par l'intermédiaire du circuit 34, lit le pouvoir d'achat PA inscrit dans la zone Zo et l'inscrit temporairement dans la mémoire de travail 26. Il lit également les poids monétaires PMi écrit dans les portions d'en-tête E et le nombre ni de points mémoire grillés dans chaque portion de débit D correspondant. Le microprocesseur 24 celcule alors la somme totale dépensée STD. On a STD = $\sum_i$ niPMi. A partir de ce résultat le solde disponible S est obtenu de la manière suivante : S = PA- - STD. La valeur du solde S est comparée au montant de prestation souhaitée par l'usager. Si le montant M est inférieur au solde S, le microprocesseur 24 met en oeuvre le programme DEBIT pour inscrire le montent M dans la mémoire 40.

Pour commander l'inscription du montant M, le microprocesseur 24 met en oeuvre un algorithme de décision DECIS stocké dans la mémoire de programme 28. C'est cet algorithme DECIS qui permet la détermination des coefficients numériques x, y, z, t qui ont déjà été définis en liaison avec la description de le figure 1.

La mise en oeuvre de l'algorithme DECIS nécessite la connaissance d'un certain nombre d'informations qui sont les suivantes : montent M à inscrire, poids monétaire PMi possibles, poids monétaires déjà ouverts, points mémoire non grillés pour les zones de débit déjà ouvertes, nombre de zones de débit Zi encore disponibles et montent du solde S. Ces différentes informations sont soit lues dans la mémoire de la carte, soit déjà acquises par le microprocesseur lors de l'exécution du programme SOLDE comme le solde S et le montent à inscrire M.

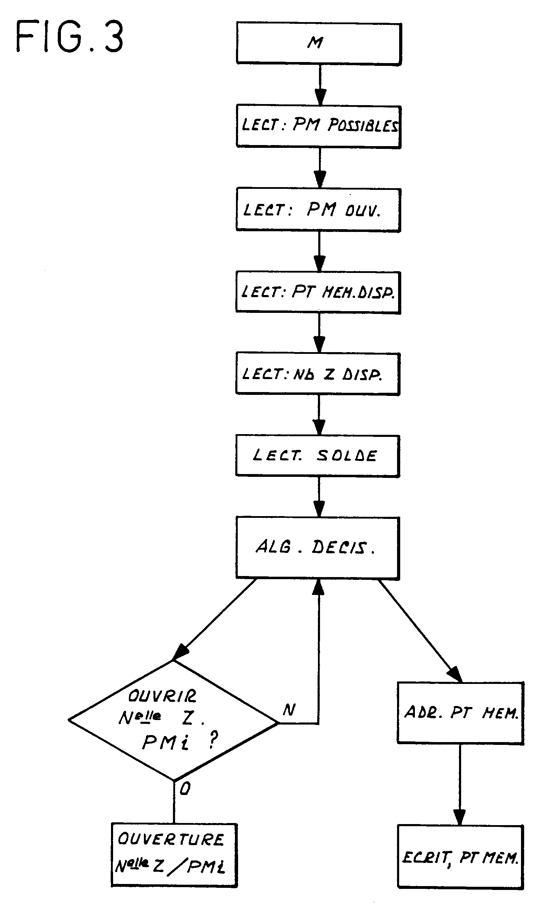

A partir de ces informations, l'algorithme DECIS détermine les coefficients numériques x, y, z, t correspondent aux divers poids monétaires et éventuellement le microprocesseur 24 met en oeuvre un sous-programme OUVZ pour l'ouverture d'une nouvelle zone de débit Zi correspondant à un poids monétaire Zi si aucune zone n a encore été ouverte pour ce poids monétaire ou si tous les points mémoire de le zone de débit correspondant au poids monétaire ont déjà été grillés ou si encore le nombre de points mémoire non grillés est insuffisant, afin d'optimiser l'utilisation des points mémoire. A partir des résultats de la mise en oeuvre de l'algorithme DECIS, le microprocesseur 24 commande, par l'intermédiaire du circuit 34, l'inscription d'un poids monétaire dans la portion d'en-tête Ei d'une nouvelle zone de débit Zi, si le sous-programme OUVZ a été exécuté, et le grillage d'un nombre de points mémoire des portions de débit D correspondant aux coefficients numériques. La figure 3 illustre les étapes de cet algorithme.

Un exemple préféré de mise en oeuvre particulier de l'algorithme DECIS est le suivant. Le microprocesseur 24 divise le montant M à inscrire par le plus fort poids monétaire PM4 lu dans le zone de données Zo de la carte. Le quotient donne le coefficient t. a) Si la zone de débit de poids monétaire PM4 est déjà ouverte et qu'elle comporte au moins t points mémoire non grillés, t points mémoire de cette zone de débit sont grillés. b) Dans le cas contraire le sous-programme OUVZ commande l'ouverture d'une zone de débit de poids monétaire PM4 si une zone de débit est encore libre (non ouverte). t points mémoire sont alors grillés dans cette nouvelle zone. c) Si dans le cas b, aucune zone de débit n'est plus libre, le coefficient numérique t est rendu égal à zéro.

Pour déterminer le coefficient z correspondent au poids monéteire immédiatement inférieur PM3, on procède de manière similaire en divisant le reste de la division précédente, s'il n'est pas nul, par le poids monétaire PM3 et l'on effectue les mêmes opérations que pour la détermination du coefficient numérique t. Si le reste n'est pas nul, on opèrera de le même manière pour déterminer les coefficients numériques y et x correspondant aux deux derniers poids monétaires PM2 et PM1.

Le figure 4a montre l'inscription dans le mémoire d'un montant égal à 12,50 FF avec des poids monétaires respectivement égaux à 0,5 FF, 1,00 FF, 2,00 FF et 5,00 FF. La figure 4b montre l'inscription ultérieure dans la même mémoire d'un montent égal à 3,5 FF.

Le mode de mise en oeuvre de l'invention qui vient d'être décrit correspond à un mode préféré de réalisation de l'invention mais certaines variantes peuvent être utilisées.

Au lieu d'utiliser une mémoire EPROM, c'est-à-dire non effaçable électriquement, on peut utiliser une mémoire du type EEPROM, c'est-à-dire effaçable électriquement. Dans ce cas, la protection est assurée par un logiciel qui interdit de faire passer à zéro (état initial) un point mémoire déjà inscrit (état logique 1). Ce logiciel est mis en oeuvre soit par le dispositif de traitement, soit par la carte si celle-ci comporte les circuits convenables. Les points inscrits ne pourront être effacés que dans le cas du rechargement de la carte, ce qui n'est possible qu'en mettant en oeuvre une procédure spécifique codée.

Au lieu d'enregistrer dans le zone protégée Zo les n poids monétaires utilisables, on peut prévoir que seule une information d'identification IN de le carte y soit inscrit en plus du pouvoir d'achat PA. Dans ce ces, le programme mis en oeuvre par le microprocesseur 24 comporte un sous-programme DETPM de détermination des poids monétaires utilisables. Le sous programme DETPM associe à chaque information d'identification IN, qui correspond à un type de carte, une liste des poids monétaires PMi utilisables dans cette carte et le codage de ce poids monétaires. Ainsi, lors de l'introduction d'une carte 12 dans le terminal de traitement 10, les circuits de traitement lisent, les poids monétaires PM codés déjà inscrits dans les zones d'en-tête E et l'information d'identification IN. A l'aide du sous-programme DETPM le système détermine les valeurs de poids monétaires déjà inscrits et peut ainsi mettre en oeuvre ultérieurement le sous-programme SOLDE. Lorsque le sous-programme OUVZ est mis en oeuvre, c'est-à-dire lorsque l'algorithme DECIS a déterminé qu'une nouvelle zone de débit devait être ouverte, l'information codée à inscrire dans la portion d'en-tête est déterminée également par le sous-programme DETPM.

Selon une autre variante de mise en oeuvre de l'invention, le nombre de zones de débit N peut ne pas être supérieur eu nombre n de poids monétaires distincts PM. Le nombre N peut être égal au nombre n ou même inférieur à celui-ci.

On comprend qu'un autre aspect important de ce système est d'empêcher qu'un utilisateur de carte ne puisse frauduleusement altérer les informations inscrites dans la carte pour obtenir des prestations correspondant à un montant total supérieur à celui qui était prévu initialement. Ce résultat pourrait être obtenu en modifiant une information de poids monétaire inscrite dans une portion d'en-tête pour que celle-ci corresponde à un poids monétaire plus faible. En effet, celà revient à diminuer frauduleusement la valeur de le somme totale dépensée STD.

Pour empêcher une telle fraude, les différents poids monétaires PMi sont codés dans les portions d'en-tête de le manière suivante : chaque portion d'en-tête comporte q points mémoire. Le poids monétaire le plus élevé, c'est-à-dire PM4 est codé en inscrivant q "1" dans la portion d'en-tête. Le poids monétaire suivant PM3 est codé par le nombre binaire immédiatement inférieur à q positions binaires, PM2 par le nombre à q positions binaires immédiatement inférieur à celui qui sert à coder PM3, etc... On a déjà donné un tel exemple de codage des poids monétaires dans le cas où q=4. Grâce à ce codage, toute altération d'une information de poids monétaire, qui ne peut consister que dans le remplacement d'un "0" par "1", aboutit à l'augmentation de ce poids monétaire et donc à l'augmentation de le valeur de STD.

Une autre façon de protéger la carte contre des tentatives de fraude consiste à utiliser un embrouillage (scrambling en anglais) entre les adresses des points mémoire et leur localisation physique dans le mémoire de le carte. Cette technique est décrite en détails dans le demande de brevet européen No. 87402851 déposée le 15 décembre 1987 au nom de la demanderesse.

Dans le cas de la présente invention, celà signifierait que les points mémoire correspondant à une portion d'en-tête et à la portion de débit correspondante n'auraient pas des adresses physiques consécutives comme le suggère le figure 1. Au contraire ces adresses physiques seraient imbriquées dans les adresses physiques des points mémoire des autres portions d'en-tête et des autres portions de débit. Il est alors nécessaire que les circuits de traitement de la machine de fourniture de prestations aient en mémoire la table de correspondance entre les adresses des points mémoire organisés, comme le montre la figure 1, et leurs adresses physiques. On comprend donc que, dans la présente demande de brevet, lorsqu'on parle des points mémoire d'une portion d'en-tête ou des points mémoire d'une portion de débit ou encore de la portion de débit correspondent à une portion d'en-tête, les points mémoire correspondants n'ont pas nécessairement des adresses physiques consécutives. Celà signifie simplement que ces points mémoire sont identifiés comme tels par la machine de traitement.

Dans les modes de réalisation décrits ci-dessus, la mémoire 40 de le carte est préformatée, c'est-à-dire qu'elle est prédécoupée en N zones de débit de même longueur comportant chacune une portion d'en-tête à q points mémoire et une portion de débit.

Selon un autre mode de mise en oeuvre de l'invention, la mémoire 40 ne comporte initialement que la zone protégée en écriture Zo, les zones de débit n'étant pas préformatées. Le reste des points mémoire est disponible pour ouvrir des zones de débit Zi. D'ailleurs, le nombre de points mémoire disponible n'est pas nécessairement fixe. C'est le cas si le carte sert pour l'obtention d'une autre prestation dont les débits successifs sont mémorisés de façon indépendante de l'pplication particulière considérée dans la présente description.

Lorsque l'usager introduit sa carte 12 dans le terminal 10, le microprocesseur 24 met en oeuvre le programme SOLDE pour déterminer le solde encore disponible comme celà a déjà été décrit.

Puis on lit les zones de débit Zi déjà ouvertes, s'il y en a, ce qui donne les poids monétaires PMi déjà ouverts et le nombre de points de mémoire non encore écrits des portions de débit correspondantes. En outre, on lit soit directement dans la zone protégée Zo, soit indirectement les n poids monétaires utilisables dans cette carte.

Puis le microprocesseur met en oeuvre le programme DECIS à partir des informations acquises précédemment et du débit M à inscrire dans la mémoire 40 de la carte. Le déroulement du programme DECIS est identique à celui qui a déjà été décrit en liaison avec les autres modes de mise en oeuvre. La différence n'apparaît que si le sous-programme OUVZ d'ouverture d'une nouvelle zone de débit Zi correspondent à un poids monétaire PMj doit être exécuté. Selon ce mode de mise en oeuvre, le sous-programme OUVZ va formater la nouvelle zone de débit Zi pour définir se portion d'entête correspondent par exemple à q points mémoire, et la portion de débit Di dont le longueur Lj est stockée en mémoire en relation avec le poids monétaire PMj à partir d'une table de correspondance. La valeur de le largeur Lj peut également être déterminée par le programme DECIS à partir de différents paramètres déjà acquis tels que le nombre total de points mémoire encore disponibles, et le fait qu'une zone de débit correspondant au même poids monétaire PMj a déjà été ouverte ou pas.

## Revendications

1. Système de gestion de moyens de paiement de prestations, comprenant :

   - au moins un support (12) d'informations amovible comportant une mémoire électronique (40) comprenant, d'une part, une zone (Zo) protégée en écriture, et , d'autre part, une zone (Z1, Z2,... ZN) non protégée,
   - au moins un dispositif (10) de traitement comprenant :

      • des moyens (14, 34) pour lire les informations stockées dans la mémoire (40) dudit support (12) d'informations amovible et pour y écrire des informations dans ladite zone non protégée,
      • des moyens (18) d'inscription d'une information de débit (M) dans ledit dispositif (10) de traitement, et
      • un ensemble (24) de traitement comportant des moyens de calcul du solde (S) disponible dans le support (12),

      caractérisé en ce que

   - la mémoire (40) comporte, dans ladite zone (Zo) protégée en écriture, une information initiale (PA) de pouvoir d'achat et n informations distinctes de poids monétaires (PMi) utilisables par le système exprimés en unités de monnaie courantes,
   - la mémoire (40) comporte, dans ladite zone non protégée, des zones (Zj) de débit ouvertes successivement au fur et à mesure des débits (M) à inscrire et affectées chacune, à un poids monétaire (PMi) particulier choisi parmi les poids monétaires utilisables par le système, prédéfinis dans la zone (Zo) protégée, chaque zone (Zj) de débit comprenant une portion (Ej) d'en-tête dans laquelle est inscrit, sous forme codée, ledit poids monétaire (PMi) correspondant et une portion (Dj) de débit constituée par une pluralité (Lj) de points mémoire, chaque point mémoire correspondant à un débit égal à une unité du poids monétaire inscrit dans la portion (Ej) d'en-tête,

   - ladite affectation et l'ouverture éventuelle de nouvelles zones de débit sont effectuées, en cours d'utilisation dudit support (12), par la mise en oeuvre d'un algorithme (DECIS) de décision à partir de l'information de débit (M) à inscrire, des poids monétaires (PMi) utilisables, des poids monétaires des zones (Zj) de débit déjà ouvertes, des points mémoire non consommés desdites zones de débit déjà ouvertes,
   - le solde (S) disponible dans le support (12) est calculé à partir de l'information (PA) de pouvoir d'achat et de la somme totale dépensée.

2. Système selon la revendication 1, caractérisé en ce que lesdits poids monétaires (PMi) sont initialement inscrits dans la zone (Zo) protégée en écriture sous forme codée ou non.

3. Système selon la revendication 1, caractérisé en ce que la mémoire (40) comporte dans la zone (Zo) protégée en écriture une information (IN) d'identification du support (12), les poids monétaires (PMi) utilisables étant déterminés par l'ensemble (24) de traitement à partir de iadite information (IN) d'identification.

4. Système selon une quelconque des revendications 1 à 3, caractérisé en ce que, pour inscrire une information de débit (M), les moyens (24) de traitement effectuent les opérations suivantes :

   (a) déterminer, parmi les n poids monétaires (PMi) stockés dans la zone (Zo) protégée, le plus grand poids monétaire (PM) contenu dans le débit (M) à inscrire ;
   (b) calculer le nombre de fois (t) que ledit plus grand poids monétaire (PM) est contenu dans le débit (M),
   (c) si le plus grand poids monétaire contenu (PM) est déjà inscrit dans une portion (E) d'entête d'une zone de débit déjà ouverte, consommer t points mémoire de la portion (D) de débit correspondante si le nombre de points mémoire non consommés est au moins égal à t ;
   (d) si le plus grand poids monétaire contenu (PM) n'est pas encore inscrit dans une portion d'en-tête d'une zone de débit déjà ouverte, ouvrir une nouvelle zone de débit, inscrire ledit poids monétaire dans la portion (E) d'en-tête de la nouvelle zone de débit ouverte et consommer t points mémoire dans la portion (D) de débit correspondante ; et

(e) répéter les opérations a à d successivement sur les parties successives du débit (M) non encore inscrites pour les autres poids monétaires pris par ordre décroissant jusqu'à l'inscription complète dudit débit.

5. Système selon l'une quelconque des revendications 1 à 4, caractérisé en ce que l'information de poids monétaire (PMi) de valeur la plus élevée est inscrite dans un portion (E) d'en-tête sur q points mémoire de ladite portion d'en-tête, et en ce que les poids monétaires (PMi) suivants sont inscrits, par ordre décroissant, à l'aide de nombres binaires décroissants sur q points mémoire.

**Patentansprüche**

1. System der Verwaltung der Mittel für die Bezahlung von Leistungen, umfassend:

   - mindestens einen beweglichen Informationsträger (12) mit einem elektronischen Speicher (40), der einerseits eine gegen Schreiben geschützte Zone (Zo) und andererseits eine nicht geschützte Zone (Z1, Z2, ... ZN) umfaßt,
   - mindestens eine Verarbeitungsvorrichtung (10), umfassend:

     . Mittel (14, 34) zum Lesen der in dem Speicher (40) des beweglichen Informationsträgers 12 abgespeicherten Informationen und um in ihn Informationen in die nicht geschützte Zone einzuschreiben,
     . Mittel (18) zum Einschreiben einer Debit-Information (M) in die Verarbeitungsvorrichtung (10), und
     . eine Verarbeitungsbaugruppe (24) mit Mitteln zum Berechnen des Saldos (S), der in dem Träger (12) verfügbar ist,

   dadurch gekennzeichnet, daß

   - der Speicher (40) in der gegen Schreiben geschützten Zone (Zo) eine Anfangsinformation (PA) der Kaufkraft und n diskrete Informationen des monetären Gewichts (PMi) umfaßt, verwendbar für das System, ausgedrückt in laufenden Geldeinheiten,
   - der Speicher (40) in der nicht geschützten Zone Debit-Zonen (Zj) umfaßt, die sukzessiv offen sind, je nach den Debits (M), die einzuschreiben sind, und jeweils eine beeinflußt bezüglich eines bestimmten monetären Gewichts (PMi), ausgewählt unter den von dem System verwertbaren monetären Gewichten, und vordefiniert in der geschützten Zone (Zo), wobei jede Debit-Zone (Zj) einen Kopfabschnitt (Ej) umfaßt, in den in codierter Form das entsprechende monetäre Gewicht (PMi) eingeschrieben ist, sowie einen Debit-Abschnitt (Dj), gebildet von einer Mehrzahl (Lj) von Speicherstellen, wobei jede Speicherstelle einem Debit entspricht gleich einer Einheit des monetären Gewichtes, das in den Kopfabschnitt (Ej) eingeschrieben ist,

   - wobei die Beeinflussung und die eventuelle Öffnung neuer Debit-Zonen während der Verwendung des Trägers (12) durch die Anwendung eines Entscheidungsalgorithmus (DECIS) erfolgt, ausgehend von der einzuschreibenden Debit-Information (M), den monetären Gewichten (PMi), die verwertbar sind, den monetären Gewichten der Debit-Zonen (Zj), die bereits geöffnet sind, den nicht verbrauchten Speicherstellen der bereits geöffneten Debit-Zonen,
   - wobei der in dem Träger (12) verfügbare Saldo (S) berechnet wird, ausgehend von der Kaufkraftinformation (PA) und der gesamten verbrauchten Summe.

2. System nach Anspruch 1, dadurch gekennzeichnet, daß die monetären Gewichte (PMi) anfänglich in die gegen Schreiben geschützte Zone (Zo) in codierter oder nicht-codierter Form eingeschrieben werden.

3. System nach Anspruch 1, dadurch gekennzeichnet, daß der Speicher (40) in der gegen Schreiben geschützten Zone (Zo) eine Identifikationsinformation (IN) des Trägers (12) umfaßt, wobei die monetären Gewichte (PMi), die verwendbar sind, bestimmt werden durch die Verarbeitungsbaugruppe (24), ausgehend von der genannten Identifikationsinformation (IN).

4. System nach einem der Ansprüche 1 bis 3, dadurch gekennzeichnet, daß zum Einschreiben einer Debit-Information (M) die Verarbeitungsmittel (24) die folgenden Operationen ausführen:

   (a) Bestimmen, unter den n monetären Gewichten (PMi), die in der geschützten Zone abgespeichert sind, des größten monetären Gewichts (PM), das in dem einzuschreibenden Debit (M) enthalten ist;
   (b) Berechnen der Anzahl von Malen (t), wie oft das genannte größte monetäre Gewicht (PM) in dem Debit (M) enthalten ist;

(c) wenn das größte enthaltene monetäre Gewicht (PM) bereits in einen Kopfabschnitt (E) einer bereits offenen Debit-Zone eingeschrieben ist, Verbrauchen von t Speicherpunkten des Abschnitts (D) des entsprechenden Debits, wenn die Anzahl von nicht verbrauchten Speicherpunkten mindestens gleich t ist;

(d) wenn das größte enthaltene monetäre Gewicht (PM) noch nicht in einen Kopfabschnitt einer bereits offenen Debit-Zone eingeschrieben ist, Öffnen einer neuen Debit-Zone, Einschreiben des genannten monetären Gewichtes in den Kopfabschnitt (E) der neuen offenen Debit-Zone, und Verbrauchen von t Speicherpunkten in dem entsprechenden Debit-Abschnitt (D); und

(e) Wiederholen der Operationen a bis d nacheinander bezüglich aufeinanderfolgender Partien des noch nicht eingeschriebenen Debits (M) für die anderen monetären Gewichte in absteigender Ordnung, bis zum vollständigen Einschreiben des Debits.

5. System nach einem der Ansprüche 1 bis 4, dadurch gekennzeichnet, daß die Information des monetären Gewichtes (PMi) des höchsten Wertes in einen Kopfabschnitt (E) auf q Speicherstellen des genannten Kopfabschnitts eingeschrieben wird, und daß die folgenden monetären Gewichte (PMi) in absteigender Ordnung mit Hilfe von absteigenden Binärzahlen auf q Speicherstellen eingeschrieben werden.

## Claims

1. A management system for means of payment for services, comprising:

   - at least one removable data carrier (12) with an electronic memory (40) comprising firstly a write-protected zone (Zo) and secondly a non-protected zone (Z1, Z2,... ZN),
   - at least one processing means (10) comprising:

       means (14, 34) for reading data stored in the memory (40) of the said removable data carrier (12) and for writing data in the said non-protected zone,
       means (18) for recording debit data (M) in the said processing means (10), and
       a processing unit (24) comprising means for calculating the balance (S) available on the carrier (12), characterized in that

   - the memory (40) has in the said write-protected zone (Zo) initial data (PA) on the purchasing power and $\underline{n}$ distinct items of data on the increments of money (PMi) which can be used by the system, expressed in current monetary units,

   - the memory (40) has within the said non-protected zone debit zones (Zj) which are opened in succession as needed to write debits (M) and are each assigned to a particular increment of money (PMi) selected from the increments of money usable by the system and defined in the protected zone (Zo), each debit zone (Zj) having a header part (Ej) in which is written in coded form the corresponding increment of money (PMi) and a debit part (Dj) formed by a plurality (Lj) of memory locations, each memory location corresponding to a debit equal to one unit of the increment of money written in the header part (Ej),
   - the said assignment and opening, when required, of new debit zones are effected in the course of use of the said carrier (12) by means of a decision algorithm (DECIS) on the basis of the debit data (M) to be written, the usable increments of money (PMi), the increments of money of the debit zones (Zj) already opened and the memory locations not used in the said debit zones already opened,
   - the balance (S) available in the carrier (12) is calculated on the basis of the data (PA) on the purchasing power and the total amount dispensed.

2. A system according to claim 1, characterized in that the said increments of money (PMi) are initially entered in the protected zone (Zo) by writing them in coded or non-coded form.

3. A system according to claim 1, characterized in that the memory (40) has data (IN) identifying the carrier (12) in the write-protected zone (Zo), the increments of money (PMi) which can be used being determined by the processing unit (24) in dependence on the said identifying data (IN).

4. A system according to any one of claims 1 to 3, characterized in that the processing means (24) effect the following operations in order to write debit data (M):

       (a) calculating from the $\underline{n}$ increments of money (PMi) stored in the protected zone (Zo) the greatest increment of money (PM) contained in the debit (M) to be written;
       (b) calculating the number of times (t) that the said greatest increment of money (PM) is contained in the debit (M);
       (c) if the greatest increment of money (PM) contained is already written in a header part (E) of an already opened debit zone, utilizing $\underline{t}$ mem-

ory locations of the corresponding debit part (D), if the number of unused memory locations is at least equal to $t$;

(d) if the greatest increment of money (PM) contained is not already written in a header part of an already opened debit zone, writing the said increment of money in the header part (E) of the newly opened debit zone and utilizing $t$ memory locations in the corresponding debit part (D); and

(e) repeating the operations $a$ to $d$ in succession for the successive portions of the debit (M) not already written, using the other increments of money taken in decreasing order of value, until the whole of the said debit has been entered.

5. A system according to any one of claims 1 to 4, characterized in that the item of data for the increment of money (PMi) of highest value is recorded in a header part (E) in $g$ memory locations of the said header part, and in that the following increments of money (PMi) are recorded in decreasing order of value using decreasing binary numbers in $g$ memory locations.

# FIG.1

| | | |
|---|---|---|
| Zo | PA | PMi |
| Z1 | E1 | D1 |
| Zi | Ei | Di |
| | | |
| ZN | EN | DN |

40

E        D

```
1 1 1 1    1 1 0 0 - - - - - - - 0
1 1 1 0    1 0 0 0 - - - - - - - 0
1 1 0 0    1 0 0 0 - - - - - - - 0
0 0 0 0    0 0 0 0 - - - - - - - 0
0 0 0 0    0 0 0 0 - - - - - - - 0
```

# FIG.4a

```
1 1 1 1    1 1 0 0 - - - - - - - 0
1 1 1 0    1 1 0 0 - - - - - - - 0
1 1 0 0    1 1 0 0 - - - - - - - 0
1 1 0 1    1 0 0 0 - - - - - - - 0
0 0 0 0    0 0 0 0 - - - - - - - 0
```

# FIG.4b

# FIG.2

# FIG.3

```
            ┌──────────────────┐
            │        M         │
            └──────────────────┘
                     │
                     ▼
            ┌──────────────────┐
            │ LECT: PM POSSIBLES│
            └──────────────────┘
                     │
                     ▼
            ┌──────────────────┐
            │  LECT: PM OUV.   │
            └──────────────────┘
                     │
                     ▼
            ┌──────────────────┐
            │ LECT: PT MEM.DISP.│
            └──────────────────┘
                     │
                     ▼
            ┌──────────────────┐
            │ LECT: Nb Z DISP. │
            └──────────────────┘
                     │
                     ▼
            ┌──────────────────┐
            │  LECT. SOLDE     │
            └──────────────────┘
                     │
                     ▼
            ┌──────────────────┐
            │  ALG . DECIS.    │
            └──────────────────┘
              /              \
             ▼                ▼
        ◇ OUVRIR ◇         ┌────────────┐
         Nelle Z.      N   │ ADR. PT MEM.│
         PMi ?  ──────────▶└────────────┘
            │ O                  │
            ▼                    ▼
     ┌────────────┐       ┌────────────┐
     │ OUVERTURE  │       │ ECRIT, PT MEM.│
     │ Nelle Z /PMi│      └────────────┘
     └────────────┘
```